# EUROPEAN PATENT SPECIFICATION

(11) **EP 2 450 276 B1**
(45) Date of publication and mention of the grant of the patent: **08.01.2014**
(21) Application number: 10400054.2
(22) Date of filing: 04.11.2010
(51) Int. Cl.: B64C 13/28, G05G 7/04

(54) **Mechanical transmission of translational motion**
Mechanische Übertragung von Translationsbewegung
Transmission mécanique de mouvement de translation

(43) Date of publication of application: 09.05.2012
(73) Proprietor: Eurocopter Deutschland GmbH, 86609 Donauwörth (DE)
(72) Inventor: Fransson, Magnus, 86609 Donauwörth (DE)
(74) Representative: Pouillot, Laurent Pierre Paul

(56) References cited:
- EP-A2- 2 034 384
- US-A1- 2007 266 813

## Description

The invention relates to a device for a mechanical transmission of translational motion for an actuator chain of an aircraft.

In aircrafts, rotor blades (for helicopters) or even propeller blades (for aircrafts) provide varying thrusts dependent from the angle of incidence of said blades. From a practical standpoint the "angle of incidence" - "thrust output" ratio is hardly ever 100%. And more specifically the ratio "pedal input" - "thrust output"' is likely even less linear as this ratio is also dependant on the entire control/actuator -chain, with all its integral parts. Any linear transmission of a control signal from a pilot may result in "forced" nonlinearities due to other parts of the actuator chain and therefore produces non-linear responses from the controlled rotor and hence inadequate reactions of the aircraft. Such unwanted nonlinear responses may be subject to analysis and a converter may be conceived to cancel out the non-linear responses of the blades to a control signal from the pilot.

The document EP2034384 describes a pedal arrangement for operating a clutch having a variable force transmission ratio. When initially depressing a pivoting pedal, a first region is traversed. In that region, the pedal force required for moving an operating member is greater than the pedal force required for a conventional pedal arrangement. In a second region, the pedal continues to pivot about a pivot axis, and the maximum force is reduced. In a final third region, the force required increases. This document is dedicated to land vehicle industry, and lacks describing orthogonal sliding guides linked by connection means with sliding passages and with a conversion mechanism holding engagement means.

The document US2007266813 discloses a mechanical transmission of translational motion with an XY stage comprising a moving table, a first guide mechanism to guide the moving table in a predetermined direction, a moving body mounted to the moving table, a second guide mechanism to guide the moving body in a direction intersecting with a guiding direction of the first guide mechanism with respect to the moving table, a drive mechanism to drive the moving table in the guiding direction of the first guide mechanism and a converting mechanism to convert motion of the moving table in the guiding direction of the first guide mechanism into motion of the moving body in a guiding direction of the second guide mechanism. This state of the art is directed to a constant linear transmission of translational motion at confined lateral portions.

The document USRE 28740 discloses a non linear conversion of a rotational input to a translational output in one direction.

The present invention is defined by the claims.

The invention provides a device for mechanical transmission of translational motion allowing nonlinear conversion of a translational input to a translational output.

According to an embodiment of the invention, a device for mechanical transmission of translational motion comprises input means with a first guide mechanism to guide the input means in a predetermined direction according to a control signal driving said input means and output means with a second guide mechanism to guide the output means in a direction intersecting with the predetermined direction of the first guide mechanism, said second guide mechanism being preferably orthogonal with respect to the first guide mechanism. Connection means are provided to link the input means to the output means. A conversion mechanism is provided to convert any of the translational motion of the input means in the predetermined direction along the first guide mechanism into translational motion of the output means in a direction along the second guide mechanism. The conversion mechanism is provided with an at least partly non linear profile and said connection means are provided with engagement means interacting with said at least partly non linear profile. Any movement of the engagement means along the non linear profile is transmitted to the connection means where said movement along the non linear profile is split into translational movements of the input means and translational movements of the output means with the ratios of said translational movements of the input means versus said translational movements of the output means reflecting the at least partly non linear profile of the conversion mechanism. According to an advantageous embodyment the non-linear responses from a rotor to control signals are analysed and the non linear profile of the conversion mechanism subsequently is designed to cancel out in a simple and highly reliable way the non-linear responses to said control signal from the pilot such that any input from the pilot controlling the "angle of incidence" of the blades of a rotor or a propeller results in a smooth and linear response of the thrust from the blades over their entire range of the angle of incidence. The invention allows the seamless linear and/or non-linear transmission of a translational motion of an input means into a different translational motion of an output means including a change of the direction of the output motion from back to forth and vice versa. The inventive mechanical transmission allows for quick and easy replacement of the conversion means to adapt to different ratios of non linearity.

According to a preferred embodiment of the invention the conversion mechanism comprises a plate with said at least partly non linear profile being integrated to said plate, said plate being essentially parallel to the plane of the second guide mechanism

According to a further preferred embodiment of the invention said engagement means is a pin extending from said connection means into said at least partly non linear profile of said plate.

According to a further preferred embodiment of the invention the at least partly non linear profile is smoothly curved with limited deviations from an overall angle of 45° of a square shaped transmission or limited deviations from a diagonal between the extreme end points of a rectangular transmission relative to either of said first guide mechanism and said second guide mechanism for high transmission rates at tolerable friction resistance from the at least partly non linear profile. In a case of different absolute travel on the input and output axes, an overall angle of 45° could be provided by means of a geared rack and pinion implemented between said input and output axes.

According to a further preferred embodiment of the invention the at least partly non linear profile provides in one of its plurality of sections for an almost linear transmission from input means to output means and in another of its plurality of sections for slowed down transmission from input means to output means till a reversal between any movements of input means and output means and vice versa.

According to a further preferred embodiment of the invention a gear, e. g. a rack - pinion - rack control is applied to the output means to linearly convert the movements of the output means induced by the at least partly non linear profile in a direction essentially in line with the input means and to stretch said movements for a subsequent output stage instead of achieving the "stretch" through the implementation of a "stretched" profile.

According to a further preferred embodiment of the invention the conversion mechanism is provided with a non-linear profile in the stage, said non-linear profile in the stage being congruent to the opposed non-linear profile in the plate and in that the pin of the conversion mechanism is modified / elongated to engage the non-linear profile in the plate and the at least partially nonlinear profile of the stage for symmetrical loads and connection means free from moments induced by the pin.

According to a further preferred embodiment of the invention the pin of the conversion mechanism is provided with a ball bearing at the interface to the non-linear profile in the plate and/or to the at least partially nonlinear profile of the stage for reduced friction.

A preferred embodiment of the invention is described in following specification, with reference to the attached drawings.
Fig. 1 shows a schematic view of a device for mechanical transmission of translational motion cut free from the conversion mechanism according to the invention,
Fig. 2 shows a schematic view of a device for mechanical transmission of translational motion with the conversion mechanism according to the invention,
Fig. 3 shows a non-linear profile according to the invention, and,
Fig. 4 shows a graph of the movements of an output stage according to an embodiment of the invention.

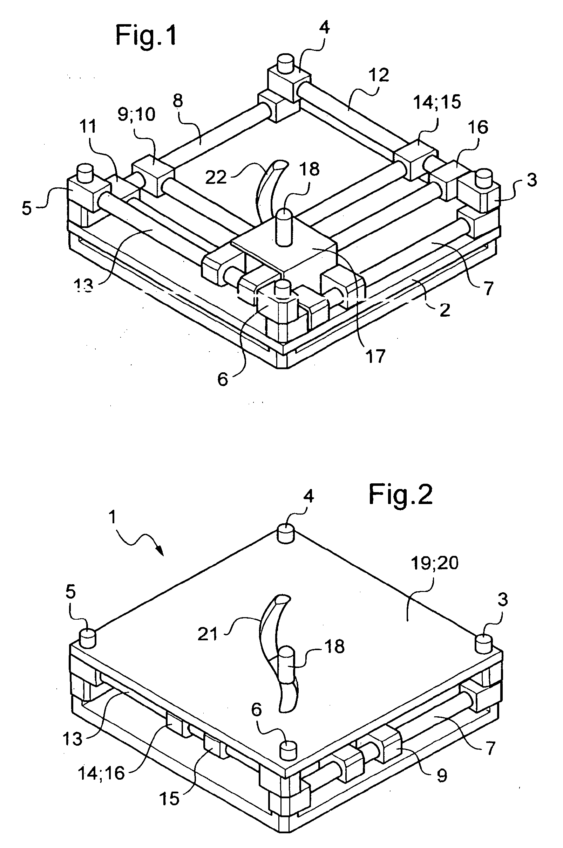

According to Fig. 1 and 2 a device 1 for mechanical transmission of translational motion comprises a first planar and rectangular base plate 2. Each of the corners of said base plate 2 is provided with an integral flange 3 -6 mounted essentially vertically with respect to the plane of the rectangular base plate 2. The device 1 is made of stiff material such as metal or stiff composite materials.

A first guide mechanism is configured by two lateral tubes 7, 8 which are parallel to each other and fitted into flanges 3 - 6. Input means 9 are movably mounted between the two lateral tubes 7, 8, said input means 9 comprising two transverse bars 10, 11 guided along the two lateral tubes 7, 8 in a predetermined direction according to a control signal driving said input means.

A second guide mechanism is configured by two further lateral tubes 12, 13 which are parallel to each other and fitted into flanges 3 - 6. Output means 14 are movably mounted between the two further lateral tubes 12, 13, said output means 14 comprising two longitudinal bars 15, 16 guided along the two further lateral tubes 12, 13 to guide the output means 14 in an essentially rectangular direction relative to the predetermined direction of the first guide mechanism 7, 8.

Connection means 17 are provided to link the input means 9 to the output means 14 said connection means 17 being formed with two passages for sliding receipt of said two transverse bars 10, 11 and - on a different level - two passages for sliding receipt of said two longitudinal bars 15, 16. Engagement means 18, i. e. a pin 18 extends from said connection means 17.

A conversion mechanism 19 comprises a rectangular cover plate 20, said cover plate 20 having essentially the same rectangular dimensions as base plate 2. The cover plate 20 is provided with an at least partly non linear profile 21 in an approximately diagonal direction of said cover plate 20. Said at least partly non linear profile 21 is smoothly curved with limited deviations from an overall angle of 45° relative to either of said first guide mechanism 7, 8 and said second guide mechanism 12, 13. The cover plate 20 is mounted onto the flanges 3 - 6 essentially parallel to the plane of the rectangular base plate 2.

The pin 18 is engaged in the rectangular cover plate 20 to interact with said at least partly non linear profile 21.

The base plate 2 with the same shape as cover plate 20 may be provided with a profile 22 mirrored to the at least partly non linear profile 21 of cover plate 20 said pin 18 being elongated to engage said non linear profiles 21, 22 in base plate 2 and cover plate 20 for symmetrical loads and in order to free connection means 17 from any moments induced by the pin 18.

The pin 18 is provided with a ball bearing at the interface to the non-linear profile 21 in the cover plate 20 and/or at the interface to the at least partially nonlinear profile of the base plate 2.

The assembly of the mechanical transmission of translational motion starts with mounting the two lateral tubes 7, 8 and the rectangular two further lateral tubes 12, 13 to the base plate 2 together with the input means 9, output means 14 and connection means 17. Cover plate 20 is mounted on the flanges 3 -6 of base plate 2 such that pin 18 is accommodated into said non linear profiles 21, 22 of the cover plate 20 and the base plate 2.

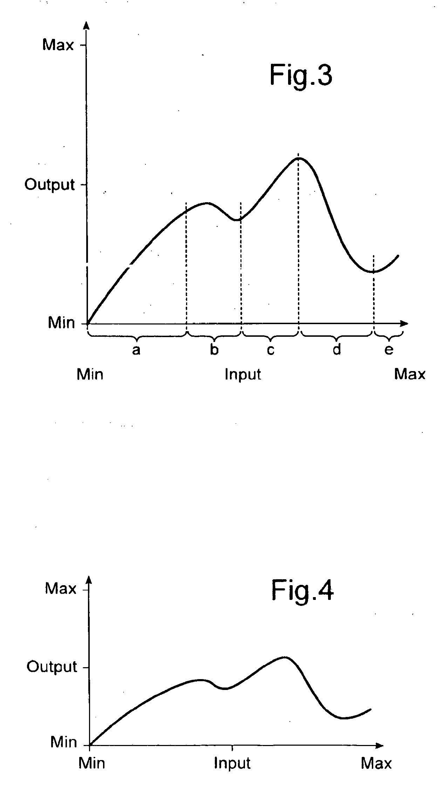

According to Fig. 3 a graph shows the relation of the movement of the input means 9 relative to the output means 14 according to the at least partly non linear profile 21 in cover plate 20, which provides in a first section a for an almost linear transmission from input means 9 to output means 14, during a subsequent section b for slowed down transmission from input means 9 to output means 14 till a reversal between any movements of input means 9 to output means 14, in a following section c again for an almost linear transmission from input means 9 to output means 14, in a further section d for slowed down transmission from input means 9 to output means 14 till a reversal between any movements of input means 9 to output means 14 and along a final section e for a reduced linear transmission from input means 9 to output means 14.

According to Fig. 4 a further graph shows the relation of the movement of the input means 9 relative to the output means 14 according to the at least partly non linear profile 21 in cover plate 20 of Fig. 3 when a gear, e. g. a rack - pinion - rack control, is applied to the output means 14 to linearly convert the movements of the output means 14 in an orthogonal direction essentially in line with the direction of the movements of the input means 9 and to stretch said movements of the output means 14 for a subsequent output stage (not shown).

### Method of operating the mechanical transmission of translational motion

The non linear profile 21 in cover plate 20 of the conversion mechanism 19 is designed according to an analysis of non-linear responses of rotor blades to a pilot's input signal.

Any movement of the input means 9 along the first guide mechanism 7, 8 as a response to a pilot's command is transferred via connection means 17 to pin 18 engaged into the non linear profiles 21, 22 in cover plate 20 and base plate 2. Pin 18 moves relative to the non linear profile 21 in order to allow the movement of input means 9, with said pin 18 being deviated by the non linear profile 21 in the direction allowed by said two transverse bars 10, 11 if the non linear profile 21 is not inline with the movement of input means 9. Said deviation of pin 18 is transmitted via the connection means 17 to a translational movement of the output means 14 allowed by said two longitudinal bars 15, 16 thus correlating mechanically the translational movements of the input means 9 to said translational movements of the output means 14 with the ratio determined by the at least partly non linear profiles 21, 22 of the conversion mechanism 19.

## Claims

1. A device (1) for mechanical transmission of translational motions, **characterized in that** the device (1) is for an actuator / control of rotor blades of an helicopter and comprises:
- a planar and rectangular base plate (2) provided with integral flanges (3-6) mounted essentially vertically with respect to the plane of the base on each of the corners of the base plate;
- two lateral tubes (7-8) parallel to each other and fitted into the integral flanges (3-6) in a predetermined direction ; two further lateral tubes (12-13) being parallel to each other and fitted into the integral flanges (3-6) in an orthogonal direction relative to the predetermined direction;
- input means (9) comprising two transverse bars (10-11) and being guided along the two lateral tubes (7-8) and having a driving input and a first translational guide mechanism with the transverse bars (10, 11) to guide in an input translational motion the input means (9) in a predetermined input translational direction, according to a control signal applied to the driving input;
- output means (14) for outputing an output translational motion and having a second translational guide mechanism with longitudinal bars (15, 16) to guide the output means (14) along the two further lateral tubes (12-13) in a output translational direction orthogonal with the input translational direction,
- connection means (17) to link the input means (9) to the output means (14)the connection means (17) having input sliding passages for sliding receipt of the transverse bars (10, 11) and output sliding passages for sliding receipt of the longitudinal bars (15, 16), said input sliding passages being vertically on a different level than the output sliding passages, and
- a conversion mechanism (19) provided with engagement means (18) extending from said connection means (17), the conversion mechanism (19) further comprises a cover plate (20) having essentially the same rectangular dimensions as the base plate (2) with an at least partly non linear profile (21, 22), the engagement means (18) being engaged in the at least partly non linear profile (21, 22) of the cover plate (20) and to the output means (14) via the connection means (17) to convert the input translational motion into an orthogonal output translational motion with a seamless conversion.

2. The device (1) according to claim 1, **characterized in that** said at least partly non linear profile (21) is integrated to said cover plate (20), said cover plate (20) being essentially parallel to the plane of the longitudinal bars (15, 16).

3. The device (1) according to claim 1,
**characterized in that** said engagement means (18) is a pin extending from said connection means (17) into said at least partly non linear profile (21) of said cover plate (20).

4. The device (1) according to claim 1,
**characterized in that** the at least partly non linear profile (21) is smoothly curved with limited deviations from a generally diagonal direction relative to either of said transverse bars (10, 11) or said longitudinal bars (15, 16).

5. The device (1) according to claim 4,
**characterized in that** the at least partly non linear profile (21) in plate (20) provides in a first section (a) for an almost linear transmission from input means (9) to output means (14), during a subsequent section (b) for slowed down transmission from input means (9) to output means (14) till a reversal between any movements of input means (9) to output means (14), in a following section (c) again for an almost linear transmission from input means (9) to output means (14), in a further section (d) for slowed down transmission from input means (9) to output means (14) till a reversal between any movements of input means (9) to output means (14) and along a final section (e) for a reduced linear transmission from input means (9) to output means (14).

6. The device (1) according to claim 1,
**characterized in that** a gear, e. g. a rack - pinion - rack control is applied to the output means (14) to linearly convert the input translational motion induced by the at least partly non linear profile (21) in a direction essentially in line with the input means (9) and to stretch said movements of the output means (14) for a subsequent output stage.

7. The device (1) according to claim 1,
**characterized in that** said device comprises a base plate (2) of the conversion mechanism (19), said base plate (2) being provided with a profile (22) which is congruent to the opposed non-linear profile (21) in the cover plate (20) and **in that** the engagement means (18) engage the profile (21) in the cover plate (20) and the congruent profile (22) in the base plate (2).

8. The device (1) according to claim 3,
**characterized in that** said engagement means (18) is a pin extending from said connection means (17) into said at least partly non linear profile (21) of said cover plate (20), the pin (18) being provided with at least one ball bearing at the interface to the non-linear profile (21) in the cover plate (20).

## Patentansprüche

1. Vorrichtung (1) zur mechanischen Übertragung von Translationsbewegungen, **dadurch gekennzeichnet, dass** die Vorrichtung (1) für ein Betätigungsglied/eine Steuerung von Rotorblättern eines Hubschraubers bestimmt ist und aufweist:
- eine ebene und rechtwinklige Basisplatte (2) mit integrierten Flanschen (3-6), die im Wesentlichen senkrecht zu der Ebene der Basis an jeder der Ecken der Basisplatte vorgesehen sind;
- zwei zueinander parallel verlaufende seitliche Rohre (7-8), die in einer vorbestimmten Richtung in die integrierten Flansche (3-6) gesteckt sind, wobei zwei weitere seitliche Rohre (12-13) parallel zueinander verlaufen und in die integrierten Flansche (3-6) in einer relativ zu der vorbestimmten Richtung senkrechten Richtung gesteckt sind,
- Eingabemittel (9) mit zwei Querstangen (10-11), die entlang der beiden seitlichen Rohre (7-8) geführt sind, und einen Antriebseingang und einen ersten Translationsführungsmechanismus mit den Querstangen (10, 11) aufweisen, um die Eingabemittel (9) in einer translatorischen Eingabebewegung in einer vorbestimmten translatorischen Eingaberichtung gemäß einem an den Antriebseingang angelegten Steuersignal zu führen,
- Ausgabemittel (14) zum Ausgeben einer translatorischen Ausgangsbewegung, die einen zweiten translatorischen Führungsmechanismus mit Längsstangen (15, 16) aufweisen, um die Ausgabemittel (14) entlang der beiden weiteren seitlichen Rohre (12-13) in einer senkrecht zu der translatorischen Eingaberichtung verlaufenden translatorischen Ausgaberichtung zu führen,
- Verbindungsmittel (17) zum Verbinden der Eingabemittel (9) mit den Ausgabemitteln (14), wobei die Verbindungsmittel (17) Eingangsgleitdurchgänge für die gleitende Aufnahme der Querstangen (10, 11) und Ausgangsgleitdurchgänge für die gleitende Aufnahme der Längsstangen (15, 16) aufweisen, wobei die Eingangsgleitdurchgänge auf in senkrechter Richtung unterschiedlicher Höhe zu den Ausgangsgleitdurchgängen verlaufen, und
- einen Umwandlungsmechanismus (19) mit Eingriffsmitteln (18), die sich von dem Verbindungsmittel (17) aus erstrecken, wobei der Umwandlungsmechanismus (19) ferner eine Abdeckplatte (20), die im Wesentlichen die gleichen rechtwinkligen Abmessungen wie die Basisplatte (2) hat, aufweist, mit einem wenigstens teilweise nichtlinearem Profil (21, 22), wobei die Eingriffsmittel (18) in das mindestens teilweise nichtlineare Profil (21, 22) auf der Abdeckplatte (20) eingreifen und mit den Ausgabemitteln (14) über die Verbindungsmittel (17) in Verbindung stehen, um die translatorische Eingabebewegung in eine translatorische orthogonale Ausgabebewegung mit einem nahtlosen Übergang umzuwandeln.

2. Vorrichtung (1) nach Anspruch 1, **dadurch gekennzeichnet, dass** das wenigstens teilweise nichtlineare Profil (21) in der Abdeckplatte (20) integriert ist, wobei die Abdeckplatte (20) im Wesentlichen parallel zu der Ebene der Längsstangen (15, 16) verläuft.

3. Vorrichtung (1) nach Anspruch 1,
**dadurch gekennzeichnet, dass** das Eingriffsmittel (18) ein Stift ist, der sich von dem Verbindungsmittel (17) in das wenigstens teilweise nichtlineare Profil (21) der Abdeckplatte (20) erstreckt.

4. Vorrichtung (1) nach Anspruch 1,
**dadurch gekennzeichnet, dass** das wenigstens teilweise nichtline-are Profil (21) leicht gekrümmt ist mit begrenzten Abweichungen von einer generell diagonalen Richtung relativ zu entweder den Querstangen (10, 11) oder den Längsstangen (15, 16).

5. Vorrichtung (1) nach Anspruch 4,
**dadurch gekennzeichnet, dass** das wenigstens teilweise nichtlineare Profil (21) in der Platte (20) gewährleistet: in einem ersten Abschnitt (a) eine im Wesentlichen lineare Übertragung von den Eingabemitteln (9) zu den Ausgabemitteln (14), in einem darauffolgenden Abschnitt (b) eine verlangsamte Übertragung von den Eingabemitteln (9) zu den Ausgabemitteln (14) bis zu einer Umkehr zwischen Bewegungen der Eingabemittel (9) zu Ausgabemitteln (14), in einem folgenden Abschnitt (c) wiederum eine im Wesentlichen lineare Übertragung von den Eingabemitteln (9) zu den Ausgabemitteln (14), in einem weiteren Abschnitt (d) eine verlangsamte Übertragung von den Eingabemitteln (9) zu den Ausgabemitteln (14), bis zu einer Umkehr zwischen den Bewegungen der Eingabemittel (9) zu den Ausgabemitteln (14), und in einem letzten Abschnitt (e) eine reduzierte lineare Übertragung von den Eingabemitteln (9) zu den Ausgabemitteln (14).

6. Vorrichtung (1) nach Anspruch 1,
**dadurch gekennzeichnet, dass** ein Getriebe, zum Beispiel eine Zahnstangen-Ritzel-Zahnstangen-Steuerung, an den Ausgabemitteln (14) angelegt ist, um die translatorische Eingabebewegung, die durch das wenigstens teilweise nichtlineare Profil (21) in einer Richtung, die im Wesentlichen mit den Eingabemitteln (9) fluchtet, hervorgerufen wird, linear umzuwandeln und die Bewegungen der Ausgabemittel (14) für eine darauffolgende Ausgabestufe zu strecken.

7. Vorrichtung (1) nach Anspruch 1,
**dadurch gekennzeichnet, dass** die Vorrichtung eine Basisplatte (2) des Umwandlungsmechanismus (19) aufweist, wobei die Basisplatte (2) mit einem Profil (22) versehen ist, welches deckungsgleich ist mit dem gegenüberliegenden nichtlinearen Profil (21) in der Abdeckplatte (20), und dadurch, dass die Eingriffsmittel (18) in das Profil (21) in der Abdeckplatte (20) und in das deckungsgleiche Profil (22) in der Basisplatte (2) eingreifen.

8. Vorrichtung (1) nach Anspruch 3,
**dadurch gekennzeichnet, dass** das Eingriffsmittel (18) ein Stift ist, der sich von dem Verbindungsmittel (17) in das wenigstens teilweise nichtlineare Profil (21) der Abdeckplatte (20) erstreckt, wobei der Stift (18) mit mindestens einem Kugellager an der Grenzfläche zu dem nichtlinearen Profil (21) in der Abdeckplatte (20) versehen ist.

## Revendications

1. Dispositif (1) pour la transmission mécanique de mouvements de translation, **caractérisé en ce que** le dispositif (1) est pour un actionneur / contrôleur de pales d'un rotor d'hélicoptère et comprend :
- une plaque de base en plan et rectangulaire (2) comportant des brides intégrales (3-6), montées essentiellement verticalement par rapport au plan de la plaque de base à chacun des coins de la plaque de base ;
- deux tubes latéraux (7-8) parallèles l'un à l'autre et adaptés dans les brides intégrales (3-6) suivant une direction prédéterminée; deux autres tubes latéraux (12-13) qui sont parallèles l'un à l'autre et adaptés dans les brides intégrales (3-6) suivant une direction orthogonale par rapport à la direction prédéterminée ;
- des moyens d'entrée (9) comportant deux barres transversales (10-11) et étant guidés le long des deux tubes latéraux (7-8) et qui comprennent une entrée d'entraînement ainsi qu'un premier mécanisme de guidage en translation avec les barres transversales (10, 11) qui guident suivant un mouvement d'entraînement en translation les moyens d'entrée (9) selon une direction de translation d'entrée prédéterminée, en accord avec un signal de commande appliqué à l'entrée d'entraînement ;
- des moyens de sortie (14) aptes à provoquer en sortie un mouvement de translation de sortie et comportant un deuxième mécanisme de guidage en translation avec des barres longitudinales (15, 16) pour guider les moyens de sortie (14) le long de deux tubes latéraux supplémentaires (12-13) selon une direction de translation de sortie qui est orthogonale à la direction de translation d'entrée ;
- des moyens de connexion (17) reliant les moyens d'entrée (9) aux moyens de sortie (14), les moyens de connexion (17) comportant des passages de coulissement d'entrée pour la réception à coulissement des barres transversales (10, 11) et des passages de coulissement de sortie pour la réception à coulissement des barres longitudinales (15, 16), lesdits passages de coulissement d'entrée étant situés verticalement à un niveau différent de celui des passages de coulissement de sortie ; et
- un mécanisme de conversion (19) comportant des moyens d'engagement (18) en saillie des moyens de connexion (17), ce mécanisme de conversion (19) comprenant en outre une plaque de recouvrement (20) ayant essentiellement les mêmes dimensions rectangulaires que la plaque de base (2) avec un profil au moins en partie non linéaire (21, 22), les moyens d'engagement (18) étant en prise avec le profil au moins en partie non linéaire (21, 22) de la plaque de recouvrement (20) et avec les moyens de sortie (14) via les moyens de connexion (17) afin d'opérer une conversion continue du mouvement de translation d'entrée vers le mouvement de translation de sortie orthogonal.

2. Dispositif (1) selon la revendication 1, **caractérisé en ce que** le profil au moins en partie non linéaire (21), est intégré à ladite plaque de recouvrement (20), cette plaque de recouvrement (20) étant essentiellement parallèle au plan des barres longitudinales (15, 16).

3. Dispositif (1) selon la revendication 1,
**caractérisé en ce que** lesdits moyens d'engagement (18) sont un plot reliant les moyens de connexion (17) au profil au moins en partie non linéaire (21) de ladite plaque de recouvrement (20).

4. Dispositif (1) selon la revendication 1,
**caractérisé en ce que** le profil au moins en partie non linéaire (21) est courbé de manière douce, avec des déviations limitées relativement à une direction généralement diagonale par rapport à chacune desdites barres transversales (10, 11) ou desdites barres longitudinales (15, 16).

5. Dispositif (1) selon la revendication 4,
**caractérisé en ce que** le profil au moins en partie non linéaire (21) dans la plaque de recouvrement (20) présente une première section (a) pour une transmission quasi linéaire entre les moyens d'entrée (9) et les moyens de sortie (14), puis une section suivante (b) pour une transmission ralentie entre les moyens d'entrée (9) et les moyens de sortie (14), jusqu'à un renversement entre les mouvements des moyens d'entrée (9) et les moyens de sortie (14), puis une section ultérieure (c) pour reprendre une transmission quasi linéaire entre les moyens d'entrée (9) et les moyens de sortie (14), puis une section supplémentaire (d) pour une transmission ralentie entre les moyens d'entrée (9) et les moyens de sortie (14) et une section finale (e) le long de laquelle est faite une transmission linéaire réduite entre les moyens d'entrée (9) et les moyens de sortie (14).

6. Dispositif (1) selon la revendication 1,
**caractérisé en ce qu'**un engrenage, par exemple une commande crémaillère - pignon - crémaillère, est appliqué sur les moyens de sortie (14) pour convertir linéairement le mouvement de translation d'entrée induit par le profil au moins en partie non linéaire (21) suivant une direction essentiellement en ligne avec les moyens d'entrée (9) et pour entendre lesdits mouvements des moyens de sortie (14) pour une étape de sortie suivante.

7. Dispositif (1) selon la revendication 1,
**caractérisé en ce que** ledit dispositif comprend une plaque de base (2) du mécanisme de conversion (19), cette plaque de base (2) étant pourvue d'un profil (22) qui est concordant avec le profil non linéaire opposé (21) de la plaque de recouvrement (20) et **en ce que** les moyens d'engagement (18) mettent en prise le profil (21) de la plaque de recouvrement (20) avec le profil concordant (22) de la plaque de base (2).

8. Dispositif (1) selon la revendication 3,
**caractérisé en ce que** lesdits moyens d'engagement (18) forment un plot étendu depuis lesdits moyens de connexion (17) jusqu'au profil au moins en partie non linéaire (21) de ladite plaque de recouvrement (20), le plot (18) étant pourvu d'au moins un pallier à billes à l'interface du profil non linéaire (21) avec la plaque de recouvrement (20).
